# EUROPEAN PATENT SPECIFICATION

(11) **EP 2 028 093 B1**
(45) Date of publication and mention of the grant of the patent: **03.11.2010**
(21) Application number: 08252446.3
(22) Date of filing: 17.07.2008
(51) Int. Cl.: B62K 19/46

(54) **Vehicle**
Fahrzeug
Véhicule

(30) Priority: 19.07.2007 JP 2007188743
(43) Date of publication of application: 25.02.2009
(73) Proprietor: Yamaha Hatsudoki Kabushiki Kaisha, Iwata-shi, Shizuoka 438-8501 (JP)
(72) Inventor: Hirayama, Yosuke c/o Yamaha Hatsudoki Kabushiki Kaisha, Iwata-shi Shizuoka-ken 438-8501 (JP); Okamoto, Naoki c/o Yamaha Hatsudoki Kabushiki Kaisha, Iwata-shi Shizuoka-ken 438-8501 (JP)
(74) Representative: Lamb, Martin John Carstairs

(56) References cited:
- EP-A- 1 790 557
- WO-A-2004/078568
- JP-A- 2002 225 765
- JP-A- 2006 176 008

## Description

### FIELD OF THE INVENTION

The present invention relates to a vehicle, in particular, a straddle type vehicle capable of housing or storing articles under a seat.

### BACKGROUND TO THE INVENTION

Straddle type vehicles are known in which a housing box (so-called a helmet housing box) for housing articles (a helmet, for example) is disposed immediately under a seat. Many of such vehicles have vehicle equipment such as a fuel tank and a battery disposed adjacent to the housing box. In this kind of straddle type vehicle, one end of the seat is mounted on the vehicle body via a hinge so as to be rotatable. When the seat is opened upward to expose the housing box and the fuel tank under the seat, articles can be put into or out of the housing box, refueling can be made, and so forth. An example of such an arrangement is disclosed in JP-A-2006-315503.

However, when the seat is opened upward for refueling of the conventional straddle type vehicle, not only the fuel tank but also the housing box under the seat is exposed. Thus, an inside of the housing box is visually recognizable. Therefore, a rider may hesitate to use the housing box as his/her private space. The opening of the housing box for putting in and out articles can be covered by a cloth, a plate member, or the like in order to prevent the inside of the housing box from being exposed when the seat is opened. However, it is not really preferable to only cover the opening of the housing by a cloth, a plate member, or the like since it may easily be displaced due to oscillations in traveling of the vehicle. A construction of the housing box is required by which privacy on the inside of the housing box can be ensured in the case that large oscillations occur in traveling of the vehicle.

EP 1 790 557 describes a motorcycle comprising a seat portion, and a rear housing member, wherein a battery case for accommodating a battery is disposed inside the rear housing member. The battery case is at least partially covered by the seat portion from a top view. The battery case is such that an operator can access the battery in order to remove or install the battery. A battery case cover is provided for opening and closing the battery case such that an operator can access the battery after opening the battery case cover. A locking and fixing device for locking and fixing the battery case cover and protecting the battery case cover and battery from being stolen is also provided. Even if the battery case cover is improperly opened, the locked seat portion can shelter a partial area above the battery case.

Document EP 17 90557 discloses a vehicle according to the preamble of claim 1.

JP2006-176008 describes a motor bicycle comprising a seat that is removably installed on a seat frame. Between the seat frame components is a housing box. The box has a bottom, front, rear, left and right sides and an opening to the upper part. A box lid for closing the upper part of the housing box is provided. The box lid is provided with an engaging pawl for engaging with an engagement hole in the front part of the box when the box is closed for preventing opening of the upper part of the box.

The present invention is made in consideration of such a problem, and has a main object to provide a vehicle in which the housing box can be used as a private space.

### SUMMARY OF THE INVENTION

An aspect of the present invention is set forth in the independent claim 1.

Optional features of the invention are set forth in the dependent claims.

Described herein is a straddle type vehicle capable of housing an article under a seat, including: a housing box having an opening at a top thereof through which an article can be put in and out; and an inner lid for blocking the opening of the housing box, in which the inner lid is disposed under the seat constructed to be rotatable so that the article can be put in and out; the inner lid can be rotated to expose the opening in a state that the seat is rotationally opened; and a restraining member is provided which restrains the inner lid from rotationally moving in the state that the seat is rotationally opened to prevent removal of the inner lid.

The restraining member may comprise the seat.

The seat may be restrained from rotating at a prescribed rotational position. The seat at the prescribed rotational position may restrain the inner lid from rotationally moving to prevent removal of the inner lid.

The inner lid may be mounted on the housing box so as to be rotatable with a hinge structure. The hinge structure for the inner lid may have a construction such that the inner lid is removable in a state that the seat which is the restraining member has been removed from the vehicle to release the restraint on rotational movement of the inner lid.

The hinge structure may be constructed with a supporting shaft formed integrally with the inner lid and a mounting piece formed integrally with the housing box. The inner lid may be supported to be rotatable by fitting the supporting shaft formed in a front part of the inner lid in an opening of the mounting piece.

The mounting piece may have a removal opening through which the supporting shaft is removable. The hinge structure may have a construction such that the inner lid is made removable by rotationally moving the inner lid to change an orientation of the supporting shaft to the removal opening in a state that the supporting shaft is fitted in the mounting piece.

The supporting shaft may have a first length and a second length shorter than the first length on a cross section perpendicular to a direction of a length of the supporting shaft. The removal opening may have an opening width shorter than the first length of the supporting shaft and longer than the second length of the supporting shaft.

The housing box may comprise a helmet housing box capable of housing a helmet.

The seat may be fixed to the vehicle in a manner such that it is removable with use of a tool. The helmet may be a full-face helmet which can be housed in the helmet housing box in a state that the opening is blocked by the seat and the inner lid.

By providing a vehicle as defined by claim 1, the inside of the housing box may be covered by the inner lid in the state that the seat is opened in refueling or the like. Thereby, a rider can house all sorts of articles without being concerned about these being viewed by other people, and use the housing box as his/her private space.

In addition, the inner lid may not be removed unless the restraining member is removed. This prevents a situation that the inner lid is easily removed even if large oscillations occur in traveling of the vehicle. Accordingly, privacy on the housing box can be ensured, and the housing box can be effectively used as a private space.

In particular, in the optional case that the seat is used as the restraining member, no other restraining member is required. Therefore, a number of parts can be reduced, and cost for production can be saved.

### BRIEF DESCRIPTION OF THE DRAWINGS

These and other aspects of the present invention will now be described, by way of example only, with reference to the accompanying drawings, in which:
FIG. 1 is an external side view schematically showing a construction of a straddle type vehicle;
FIG. 2 is a schematic side view showing the straddle type vehicle with a seat removed;
FIG. 3 is an external perspective view showing a construction under the seat in a state that the seat is rotationally opened;
FIGs. 4(a) and 4(b) are schematic side views showing essential parts around a helmet housing box with the essential parts enlarged;
FIG. 5 is an enlarged view of essential parts with a vicinity of a mounting part (a hinge structure) of an inner lid enlarged;
FIGs. 6(a) and 6(b) are drawings schematically showing the inner lid hinge structure with the inner lid closed;
FIGs. 7(a) and 7(b) are drawings for explaining that the inner lid is removably mounted on the helmet housing box;
FIG. 8 is a side view showing a construction around a seat hinge structure;
FIG. 9 is a top view showing the construction of the seat hinge structure;
FIGs. 10(a) through 10(c) are drawings showing steps for mounting the inner lid on the helmet housing box;
FIGs. 11(a) and 11(b) are drawings showing a modification that a stopper mechanism as a restraining member is separately provided;
FIGs. 12(a) and 12(b) are drawings showing a modification that a stopper mechanism as a restraining member is separately provided; and
FIG. 13 is a drawing showing a modification that a spring balance structure as the restraining member is provided.

### DETAILED DESCRIPTION OF THE DRAWINGS

An embodiment according to the present invention will be described hereinafter with reference to drawings. In the following drawings, the same reference numerals and symbols are given to members and parts having the same effects. The present invention is not limited to the embodiment described herein.

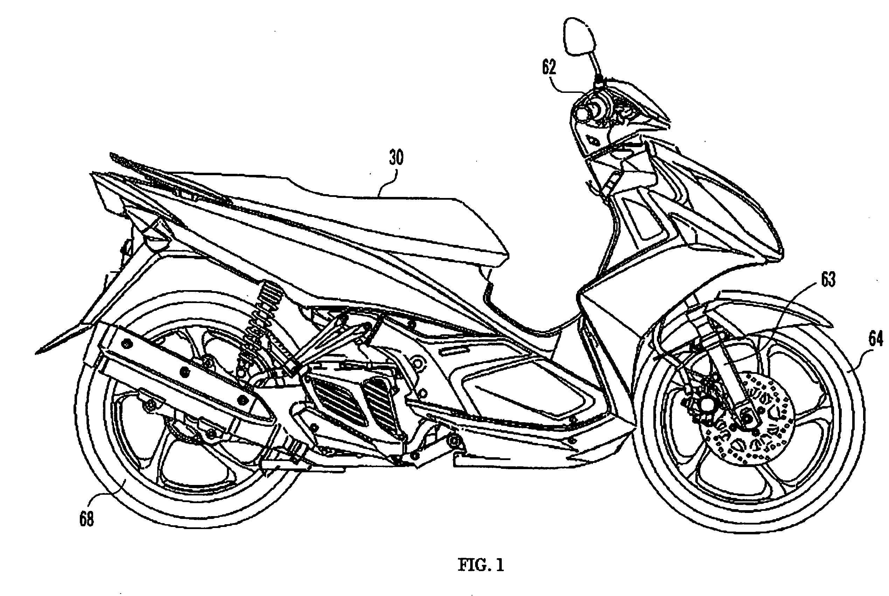

A straddle type vehicle 100 (also referred to as "vehicle" hereinafter) according to an embodiment the present invention will be described with reference to FIG. 1. FIG. 1 is an external side view schematically showing a construction of the straddle type vehicle 100 of this embodiment.

The straddle type vehicle 100 according to this embodiment is a so-called underbone type motorcycle. A seat 30 is disposed at a center part in the vehicle fore-and-aft direction. Steering handlebars 62 are disposed in front of the seat 30. A front fork 63 extends forwardly downward from the handlebars 62. The front fork 63 supports a front wheel 64 mounted on a foremost part of the vehicle body. A rider seated on the seat 30 operates the handlebars 62. This operating force is transmitted to the front wheel 64 via the front fork 63. A traveling direction of the straddle type vehicle 100 is determined by changing a direction of the front wheel 64. An engine is disposed below the seat 30. A rear wheel 68 is mounted rearward of the engine. Driving force generated by the engine is transmitted to the rear wheel 68 via a drive transmission system.

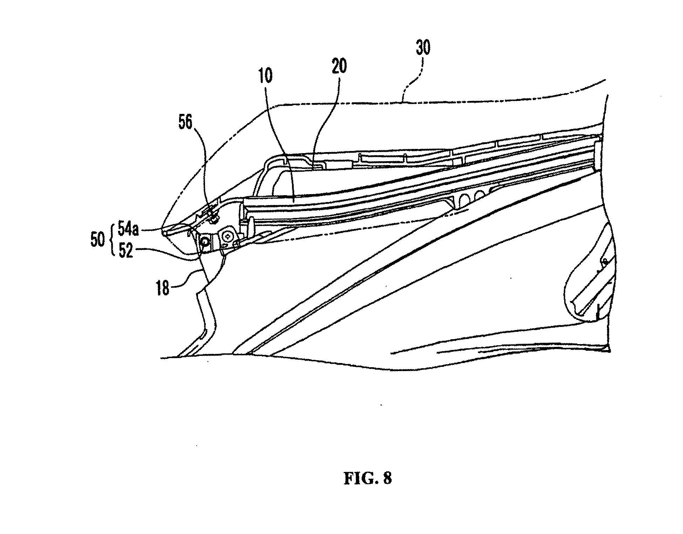

Articles such as a helmet can be housed under the seat in the straddle type vehicle 100 of this embodiment. A front end of the seat 30 of this embodiment is pivotally supported by the vehicle body in a rotatable manner via a hinge 50 (FIG. 8). A rear end of the seat 30 is fixed to the vehicle body via a locking mechanism (not shown). With this construction, a rider can expose a housing box under the seat and put in and out articles and so forth by unlocking the locking mechanism and opening the seat 30 upward.

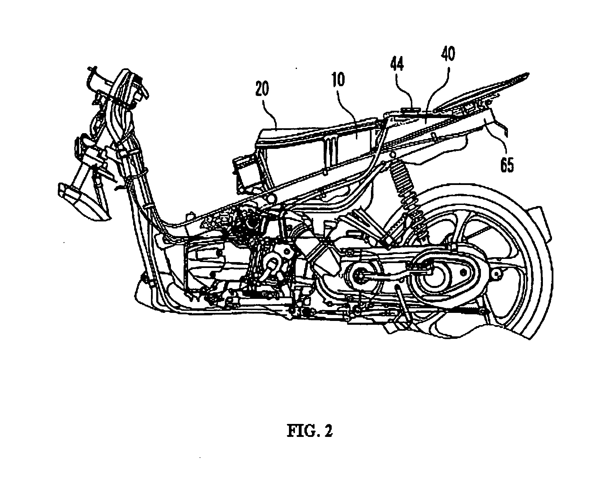

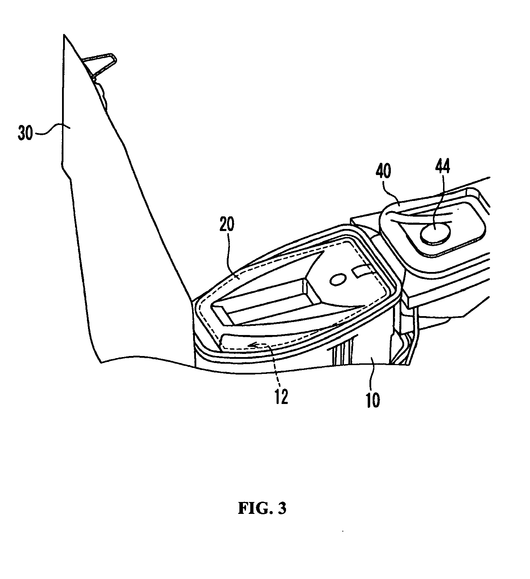

A construction under the seat of the straddle type vehicle 100 will be described with reference to FIGs. 2 and 3. FIG. 2 is an external side view showing the construction under the seat. FIG. 3 is an enlarged external side view schematically showing essential parts.

The straddle type vehicle 100 of this embodiment includes a housing box or a storage container 10 and a fuel tank 40 under the seat 30.

The fuel tank 40 comprises a container for storing fuel (such as gasoline) and is disposed in a rear space under the seat. A fuel supply opening is formed at a center part on an upper surface of the fuel tank 40. The fuel supply opening is normally blocked by a fuel supply opening cover 44. The housing box 10 is disposed in front of the fuel tank 40. The housing box 10 according to this embodiment is a so-called helmet housing box, which is a container for housing a helmet (not shown). However, the housing box or storage container 10 can house all sorts of articles instead of a helmet. Where the housing box 10 defines a helmet box, as in the present embodiment, it is required only that the helmet housing box 10 has a shape and a size appropriate for housing a helmet. The helmet housing box 10 is a resin container in the shape of a rectangular parallelepiped in this embodiment. The helmet housing box 10 is disposed in a front space under the seat in a manner such that the direction of the length of the helmet housing box 10 is along a vehicle body frame 65 extending in the fore-and-aft direction.

The helmet housing box 10 has an opening 12 at a top thereof. Articles such as a helmet are inserted and removed via the opening 12. The opening 12 is normally blocked by an inner lid 20 as shown in FIG. 3. The inner lid 20 of this embodiment is disposed to cover the opening 12 of the helmet housing box 10. It is required only that the inner lid 20 have a shape appropriate for covering the opening 12 to the degree that the opening 12 is not exposed. The inner lid 20 is a generally rectangular plate member in this embodiment.

It is required only that the opening 12 be formed to have a shape and a size appropriate for inserting and removing a helmet. The opening 12 is not limited to the generally rectangular shape shown in the figure, but may be of a different shape. For example, a circular shaped opening may be provided at an upper surface of the helmet housing box 10. In this case, a shape and a size of the inner lid 20 may be properly determined according to the shape and so forth of the opening 12. A location of the opening is not limited to the upper surface of the helmet housing box, but the opening may be properly formed in a preferable position (a position that a helmet can be easily inserted and removed).

In this embodiment, the helmet to be housed in the helmet housing box 10 is a full-face helmet. That is, a construction of the vehicle is arranged such that a large article such as a full-face helmet can be housed in the helmet housing box in a state that the opening 12 is blocked by the seat 30 and the inner lid 20.

In this embodiment, the vehicle includes the helmet housing box 10 having the opening 12 for putting in and out a helmet at the top thereof and the inner lid 20 for blocking the opening 12 of the helmet housing box 10. The inner lid 20 is disposed under the seat 30 constructed to be rotatable for inserting and removing a helmet. Therefore, the inside of the helmet housing box 10 can be covered by the inner lid 20, for example, in a state that a seat 30 is rotationally opened in refueling. Thereby, a rider can house articles in the helmet housing box 10 without being concerned about such articles being seen by other people, and use the helmet housing box 10 as a so-called private space.

It is required only that a material forming the inner lid 20 be a material nontransparent to the degree that it cannot be seen through. Although it is not limited to a specific material, an example of a preferable material is a resin material (for example, polypropylene). The inner lid made of resin is lighter comparing with the inner lids made of other materials (for example, metal). This results in an improvement in operability of the inner lid in opening and closing. Further, the inner lid made of textured resin can be preferably used. Such a construction can improve the quality of the interior of a part under the seat and enhance luxury of the vehicle.

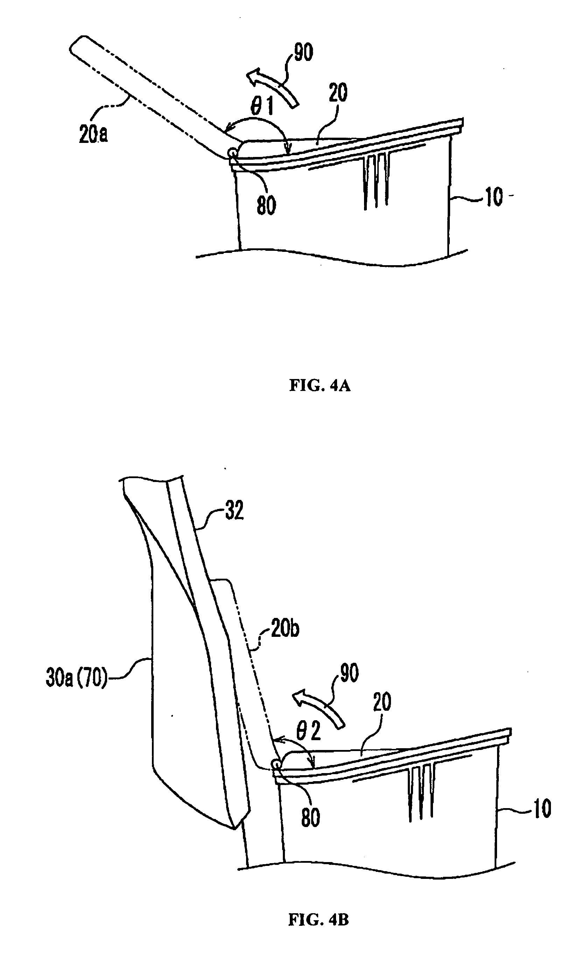

A construction of the helmet housing box under the seat, in particular, a construction of the inner lid for covering the opening of the helmet housing box, will now be described with reference to FIGs. 4(a) and 4(b). FIGs. 4(a) and 4(b) are schematic side views for schematically showing essential parts around the helmet housing box with the essential parts enlarged.

The inner lid 20 of this embodiment is constructed to be rotatable to expose the opening 12 in the state that the seat 30 is rotationally opened. That is, a front part of the inner lid 20 is mounted on the helmet housing box 10 so as to be rotatable by a hinge structure 80. The opening 12 of the helmet housing box 10 is exposed by opening the inner lid 20 upward (the arrow "90"). Articles can be inserted and removed via the opening 12 by rotating the inner lid 20 after opening the seat 30 as described above.

The hinge structure 80 of the inner lid 20 has a construction such that removal of the inner lid 20 is allowed when the inner lid 20 is rotationally moved to an inner lid position 20a in FIG. 4(a). In this embodiment, the hinge structure 80 is constructed in a manner such that the inner lid 20 can be attached to and removed from the helmet housing box 10 when the inner lid 20 is rotationally moved from a closed state (that is, a rotational angle θ = 0°) to a rotational angle θ1 (for example, approximately 140°).

Further, a restraining member 70 for restraining rotation to the inner lid position 20a mentioned above is provided to prevent removal of the inner lid 20. The restraining member 70 of this embodiment is the seat 30 as shown in FIG. 4(b). That is, the inner lid 20 is rotationally moved from the closed state and abuts a back surface 32 of the seat 30. Thereby, rotation is restrained at an inner lid position 20b at which a rotational angle of the inner lid 20 becomes θ2 (for example, approximately 110°) smaller than θ1. Accordingly, removal of the inner lid 20 can be prevented since the inner lid 20 cannot be rotationally moved to the inner lid position 20a in FIG. 4(a). It is preferred that the restraining member 70 be constructed to restrain the inner lid 20 from rotating to the inner lid position 20a, yet be able to allow a rotation to the degree that a helmet and so forth can be inserted and removed from the helmet housing box.

The seat 30 of this embodiment is constructed to be rotatable for inserting and removing a helmet and so forth. The seat 30 is restrained from rotating at a prescribed rotational position (a seat position 30a herein). The seat 30 at the prescribed rotational position restrains the inner lid 20 from rotationally moving and prevents removal of the inner lid 20. That is, the seat 30 of this embodiment functions as the restraining member 70 at the prescribed rotational position at which the seat is fully opened. All sorts of means employed in typical seat rotating mechanisms are applicable to means for restraining rotation of the seat 30.

It is required only that the prescribed rotational position of the seat 30 be a rotational position at which the inner lid 20 cannot rotate to the inner lid position 20a. The prescribed rotational position may be properly changed according to a positional relationship between the inner lid 20 and the seat 30, for example. However, it is preferred that the prescribed rotational position be a rotational position at which the rotational angle θ2 of the inner lid 20 is 90° or more when the seat is opened at the seat position 30a in FIG. 4(b). Thereby, the inner lid 20 in an opened state can be supported by the back surface 32 of the seat 30, and articles can be smoothly inserted and removed from the helmet housing box.

With this embodiment, the inner lid 20 cannot be removed unless the restraining member 70 (the seat 30a herein) is removed. This can prevent the inner lid 20 from being easily removed in the case that large oscillations occur in traveling of the vehicle. Accordingly, privacy on the inside of the helmet housing box can be ensured, and the helmet housing box can be effectively used as a private space.

If the restraining member 70 is cleared, the inner lid 20 can be removed by rotating it to the position "20a" at which the inner lid is removable. Therefore, a rider can make his/her own choice to have the inner lid 20 or not. For example, a rider can increase a capacity of the helmet housing box by removing the inner lid 20. In a different way, a rider can use the helmet housing box as his/her private space by mounting the inner lid 20 on the helmet housing box 10.

Further, the seat 30 is used as the restraining member 70 in this embodiment, and thus no separate restraining member 70 is required. Therefore, a number of parts can be reduced, and cost for production can be saved.

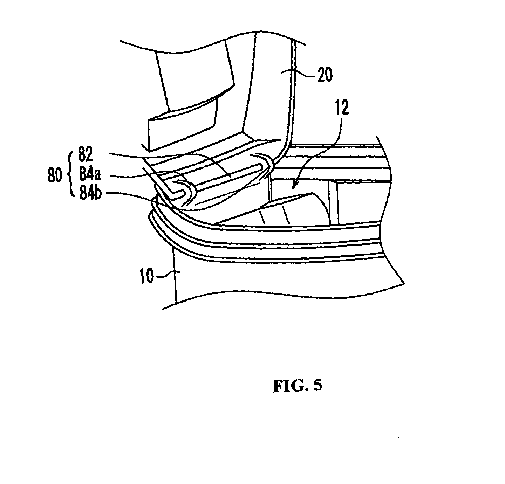

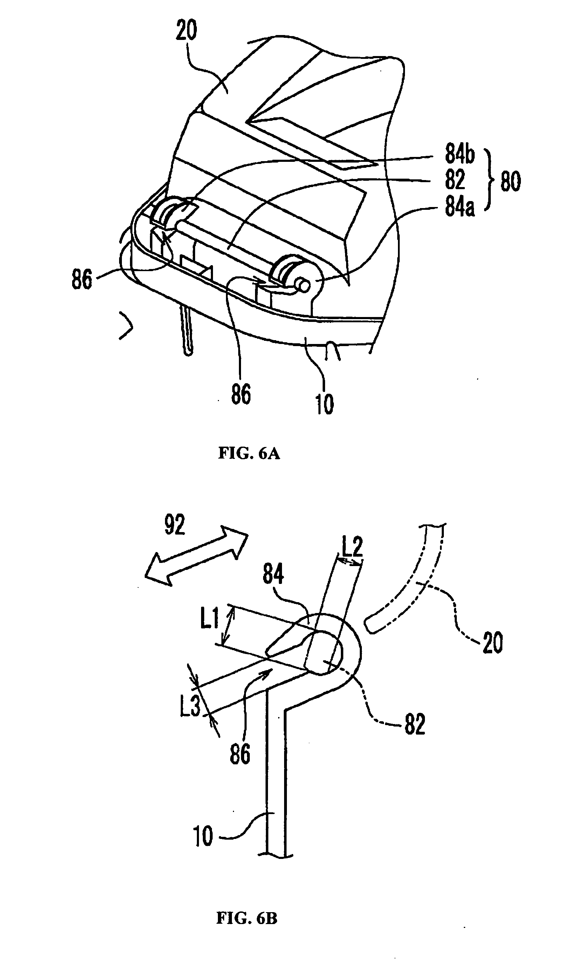

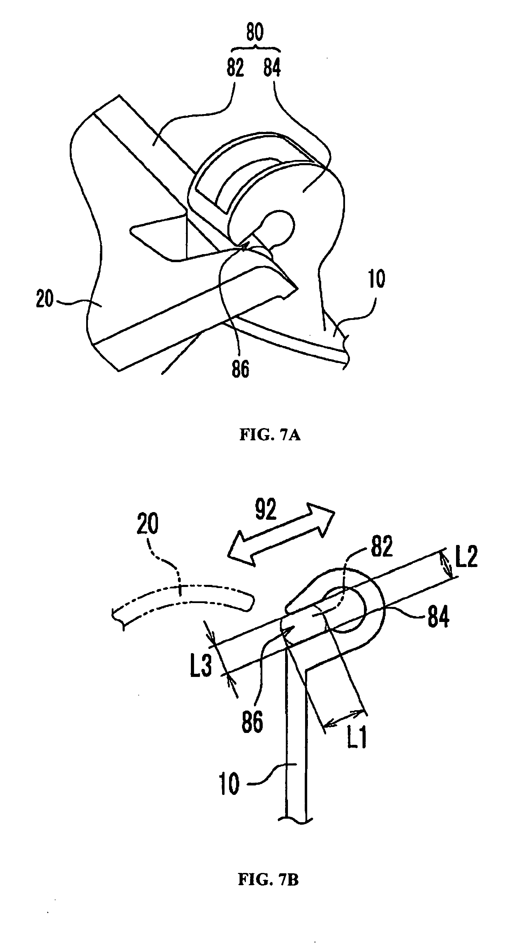

The construction of the inner lid 20, and in particular, a removal preventing mechanism for the inner lid 20 will now be described with reference to FIGs. 5 through 7. FIG. 5 is an enlarged view of essential parts schematically showing a vicinity of a mounting part (the hinge structure) of the inner lid with the vicinity enlarged. FIGs. 6(a) and 6(b) are drawings schematically showing the inner lid hinge structure with the inner lid closed. FIGs. 7(a) and 7(b) are drawings for explaining that the inner lid is removably mounted on the helmet housing box.

As shown in FIG. 5, the inner lid 20 is mounted on the helmet housing box 10 so as to be rotatable by the hinge structure 80. The inner lid hinge structure 80 of this embodiment is constructed with a supporting shaft 82 and a pair of mounting pieces 84a and 84b into which the supporting shaft 82 is fitted. The supporting shaft 82 is a bar-shaped member extending along a front end of the inner lid 20, and formed integrally with the inner lid 20. On the other hand, the pair of mounting pieces 84a and 84b are hook-shaped members protruded upward from the helmet housing box 10 and formed integrally with a front part of the helmet housing box 10. The supporting shaft 82 provided in the front part of the inner lid 20 is fitted in openings of the mounting pieces 84a and 84b of the helmet housing box 10, and thereby the inner lid 20 is rotatably supported.

As described above, in this embodiment, the inner lid 20 is rotatably coupled with the helmet housing box 10 via the inner lid hinge structure 80 formed integrally with the helmet housing box 10 and the inner lid 20. Therefore, the inner lid hinge structure 80 can be substantially constructed only with the helmet housing box 10 and the inner lid 20. Accordingly, no separate member for a rotatable coupling is required. A number of parts can be reduced, and an appearance of the inner lid hinge structure 80 can be made compact.

The inner lid hinge structure 80 has a construction such that the inner lid 20 is rotatably supported and the inner lid 20 is mounted in a removable manner. That is, the inner lid hinge structure 80 has a construction such that removal of the inner lid 20 is allowed when the inner lid 20 is rotated to the position at which the inner lid 20 is removable (see the inner lid position 20a in FIG. 4(a)). This will be described in further detail below.

As shown in FIG. 6(b), the supporting shaft 82 is in a shape such that a cross section perpendicular to the direction of the length of the supporting shaft 82 extends along one direction (a generally rectangular shape in the figure). The supporting shaft 82 has a first length "L1" along said one direction and a second length "L2" which is shorter than the first length.

On the other hand, as shown in FIGs. 6(a) and 6(b), the mounting pieces 84a and 84b have removal openings 86 through which the supporting shaft 82 can be removed in the radial direction. That is, the supporting shaft 82 is mounted on or removed from the helmet housing box 10 via the removal openings 86. As shown in FIG. 6(b), the removal opening 86 has an opening width "L3" which is shorter than the first length "L1" of the supporting shaft 82 and slightly longer than the second length "L2" of the supporting shaft 82.

As shown in FIG. 6(b), in the above construction, the supporting shaft 82 cannot be inserted through the removal openings 86 in the case that the length of the supporting shaft 82 facing the removal opening 86 is longer than the opening width "L3". However, as shown in FIG. 7(b), the supporting shaft 82 can be selectively inserted through the removal openings 86 in the case that the length of the supporting shaft 82 facing the removal opening 86 is the second length "L2" shorter than the opening width "L3". That is, the inner lid 20 can be removed from the helmet housing box 10 when an orientation of the supporting shaft 82 to the removal openings 86 is changed by rotating the inner lid 20 in a state that the supporting shaft 82 is fitted in the mounting pieces 84. A rotational position of the inner lid 20 in FIGs. 7(a) and 7(b) corresponds to the inner lid position 20a in FIG. 4(a) at which the inner lid 20 is removable.

In this embodiment, an example is described that the cross section perpendicular to the direction of the length of the supporting shaft 82 is a generally rectangular shape. However, if the cross section has a shape extending in one direction (that is, a shape having a first length and a second length shorter than the first length), the supporting shaft can be selectively inserted through the removal openings by changing an orientation of the supporting shaft to the removal openings. Therefore, the cross section of the supporting shaft may be a shape other than a generally rectangular shape (such as ellipse, oval, or polygon extending in one direction).

The restraining member 70 (the seat 30 herein) is provided so that the inner lid 20 does not rotationally move to the position at which the inner lid 20 is removable (the inner lid position 20a in FIG. 4(a)). This restrains removal of the inner lid 20. In other words, the inner lid 20 is removable in a state that the seat 30 which is the restraining member is removed from the vehicle and the restraint is released.

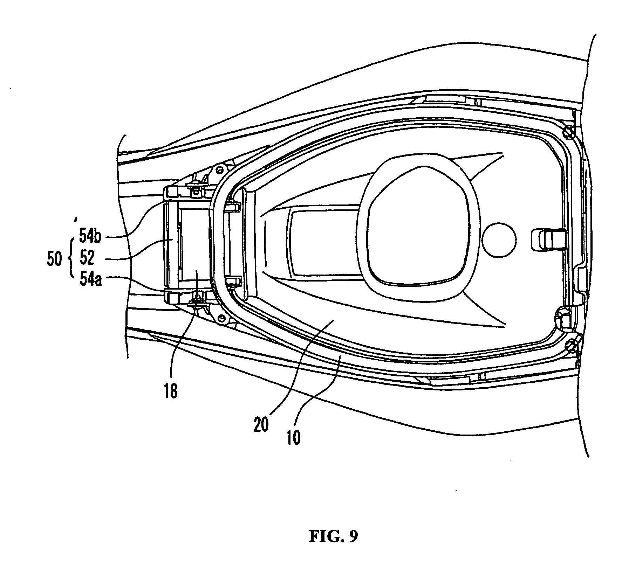

As shown in FIGs. 8 and 9, the seat 30 as the restraining member is fixed to the vehicle so as to be rotatable by a seat hinge structure 50. Specifically, a battery box 18 for housing a battery (not shown) is provided in a front part of the helmet housing box 10. The seat hinge structure 50 for supporting the seat 30 is formed above the battery box 18. All sorts of hinge structures employed in typical seat rotating mechanisms can be applied to the seat hinge structure 50. The seat hinge structure 50 of this embodiment is constructed with a supporting shaft 52, and mounting pieces 54a and 54b in which the supporting shaft 52 is fitted. The seat 30 is fixed to the seat hinge structure 50 via screws 56.

In the above construction, the seat 30 can be removed by loosening the screws 56 with use of a tool (such as a screwdriver), and further the capacity of the helmet housing box 10 can be increased by removing the inner lid 20. In other words, the seat 30 cannot be removed unless a tool (such as a screwdriver) is used. Thereby, removal of the inner lid 20 can be prevented. As a result, the inner lid 20 is not easily removed in traveling of the vehicle.

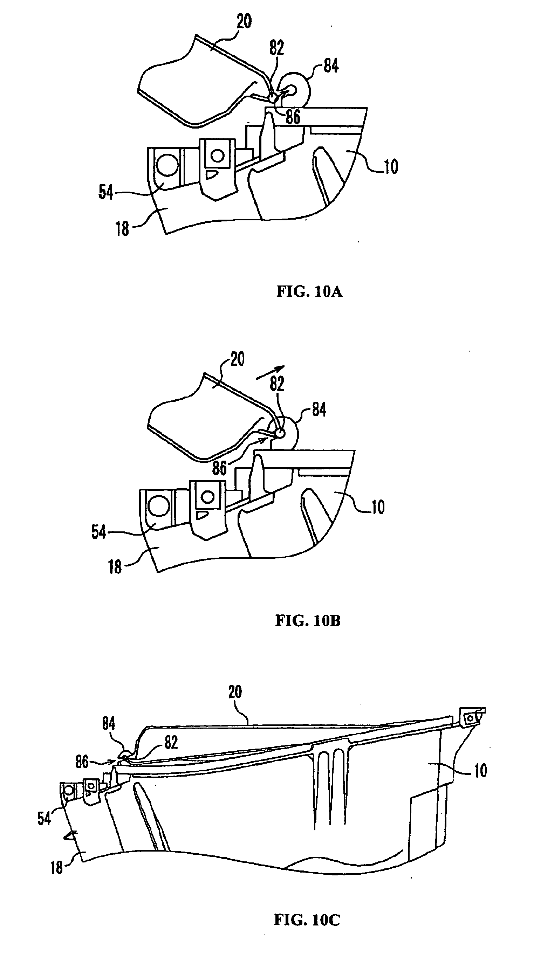

The steps described above are made in the opposite order to mount the inner lid 20 on the helmet housing box 10. That is, as shown in FIG. 10(a), the supporting shaft 82 of the inner lid 20 is first disposed with an angle thereof adjusted such that a direction of a thinner part of the supporting shaft 82 faces the removal openings 86. Next, as shown in FIG. 10(b), the supporting shaft 82 is slid in the direction of the arrow in the figure and inserted through the removal openings 86. Finally, as shown in FIG. 10(c), the inner lid 20 is rotated to the closed state. Thereby, the inner lid 20 can be mounted on the helmet housing box 10. In addition, removal of the inner lid 20 can be prevented by mounting the seat 30 as the restraining member with use of a tool thereafter.

In the embodiments described above, the restraining member 70 is provided by the seat 30. However, the restraining member 70 is not limited to such a construction, but it is required only that the restraining member 70 be a member having a function for restraining rotation of the inner lid 20, and a vehicle member other than the seat may be substituted. In a different way, the restraining member can be independently provided.

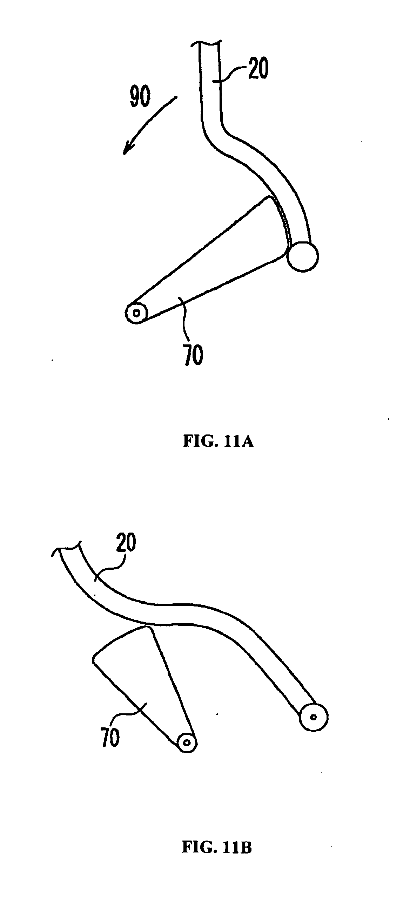

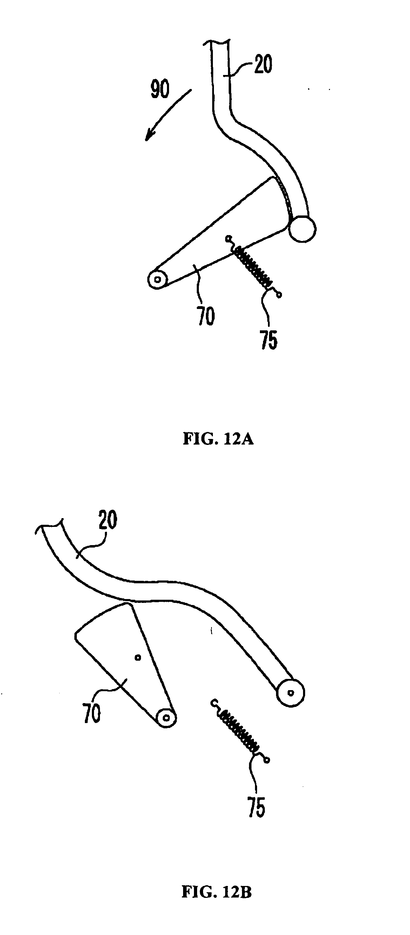

For example, FIGs. 11(a) and 11(b) show a modification that a stopper mechanism as the restraining member 70 is separately provided. As shown in FIG. 11(a), a stopper 70 is fixed to a position in which it is capable of restraining the inner lid 20 from moving to the opening direction 90. If the stopper 70 is slid and released as shown in FIG. 11(b), the inner lid 20 can be rotated to a position at which the inner lid 20 is removable. As a result, the inner lid 20 is removable from the helmet housing box 10. As shown in FIG. 12(a), means to fix the stopper 70 is, for example, urging force of a spring 75 in this case. As shown in FIG. 12(b), the stopper 70 can be released by removing the spring 75 from the stopper 70. The stopper may be fixed by means other than the spring shown in the figure such as screwing and pinning.

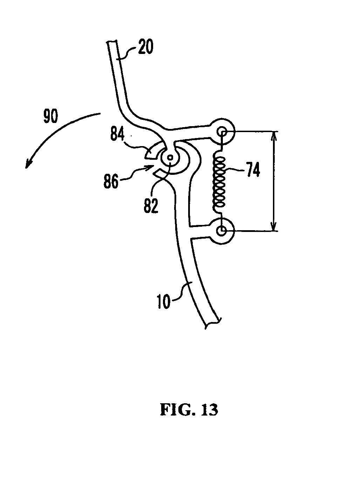

FIG. 13 shows a modification that in which spring balance structure 70 is provided as the restraining member 70. In the spring balance structure 70, a spring 74 is interposed between the inner lid 20 and the helmet housing box 10, and the inner lid 20 is restrained from moving to the opening direction by elastic force acting in a direction in which the spring 74 contracts. The inner lid can be rotated to the position at which it is removable by rotating the inner lid to a large degree against the elastic force of the spring 74.

The "straddle type vehicle" in this specification is not limited to vehicles in which a rider is seated while straddling a seat, but also includes vehicles in which a rider is seated with both his/her legs placed next to each other (typically scooter type vehicles). The straddle type vehicle 100 shown in FIG. 1 is an underbone type motorcycle. However, the present invention is not limited to this case, but is applicable to a straddle type vehicle capable of housing a helmet under a seat. For example, the present invention is applicable to vehicles other than underbone type motorcycles such as four-wheeled buggies (ATV: All Terrain Vehicle) and snowmobiles.

In the foregoing, the present invention is described with preferable embodiments. However, the descriptions are not limitations, and various modifications are of course possible.

The present invention can provide a straddle type vehicle in which an inside of a helmet housing box can be concealed from the outside when a seat is opened.

### Description of Reference Numerals and Symbols

10: helmet housing box
12: opening
18: battery box
20: inner lid
20a: inner lid position at which inner lid is removable
20b: inner lid position at which rotation is restrained
30: seat
30a: prescribed rotational position of seat
32: back surface
40: fuel tank
44: fuel supply opening cover
50: seat hinge structure
52: supporting shaft
54: mounting piece
62: handlebars
63: front fork
64: front wheel
68: rear wheel
70: restraining member
74: spring
75: spring
80: hinge structure
82: supporting shaft
84: mounting piece
86: removal opening
90: opening direction
92: slide direction
100: straddle type vehicle
L1: first length
L2: second length
L3: opening width

## Claims

1. A vehicle comprising:
a seat (30) mounted on the vehicle;
a housing box (10) positioned under the seat (30) and adapted to be accessed by moving the seat (10), wherein the housing box (10) defines an opening (12) through which an article can be inserted and removed;
an inner lid (20) for selectively blocking the opening (12) of the housing box (10), wherein the inner lid (20) is adapted to be rotated to expose the opening (12) **characterized in that** the inner lid (20) is adapted to be removed only after it has been rotationally moved to an inner lid prescribed rotational position (20a) and
the vehicle further comprises a restraining member (70) adapted to restrain the rotation of the inner lid (20) at an inner lid rotational position (206) at which the rotational angle (θ2) of the inner lid (20) is smaller than the rotational angle (θ1) of the inner lid (20) at the inner lid prescribed rotational position (20a) to prevent removal of the inner lid (20).

2. The vehicle according to claim 1, wherein the seat (30) is rotatably mounted on the vehicle and is adapted to be rotated to permit access to the housing box (10).

3. The vehicle according to claim 1 or 2, wherein the restraining member (70) comprises the seat (30).

4. The vehicle according to claim 3,
wherein the seat (30) is adapted to be restrained from rotating at a prescribed rotational position; and
the seat (30) at the prescribed rotational position is adapted to restrain the inner lid (20) from rotationally moving to prevent removal of the inner lid (20).

5. The vehicle according to any preceding claim,
wherein the inner lid (20) is mounted on the housing box (10) so as to be rotatable with a hinge structure (80); and
the hinge structure (80) for the inner lid (20) has a construction such that the inner lid (20) is removable in a state that the restraining member (70) comprising the seat (30) has been removed from the vehicle to release the restraint on rotational movement of the inner lid (20).

6. The vehicle according to claim 5,
wherein the hinge structure (80) is constructed with a supporting shaft (82) mounted on the inner lid (20) and a mounting piece (84) mounted on the housing box (10); and
the inner lid (20) is supported to be rotatable by fitting the supporting shaft (82) of the inner lid (20) in an opening (86) of the mounting piece (84).

7. The vehicle according to claim 6,
wherein the mounting piece (84) has a removal opening (86) through which the supporting shaft (82) is removable; and
the hinge structure (80) has a construction such that the inner lid (20) is made removable by rotationally moving the inner lid (20) to change an orientation of the supporting shaft (82) with respect to the removal opening in a state that the supporting shaft (82) is fitted in the mounting piece (84).

8. The vehicle according to claim 7,
wherein the supporting shaft (82) has a first length (L1) and a second length (L2) shorter than the first length (L1) on a cross section perpendicular to a direction of a length of the supporting shaft (82); and
the removal opening (86) has an opening width (L3) shorter than the first length (L1) of the supporting shaft (82) and longer than the second length (L2) of the supporting shaft (82).

9. The vehicle according to any preceding claim, wherein the housing box (10) comprises a helmet housing box capable of housing a helmet.

10. The vehicle according to claim 9,
wherein the seat (30) is fixed to the vehicle in a manner such that it is removable with use of a tool; and
the helmet is a full-face helmet which can be housed in the helmet housing box (10) in a state that the opening (12) is blocked by the seat (30) and the inner lid (20).

11. The vehicle according to any preceding claim, wherein the vehicle is a straddle type vehicle.

## Patentansprüche

1. Fahrzeug, das Folgendes umfasst:
einen Sitz (30), der an dem Fahrzeug angebracht ist,
einen Unterbringungskasten (10), der unter dem Sitz (30) angeordnet und dafür eingerichtet ist, durch ein Bewegen des Sitzes (30) einen Zugang zu gewähren, wobei der Unterbringungskasten (10) eine Öffnung (12) definiert, durch die ein Artikel eingefügt und entnommen werden kann,
einen inneren Deckel (20) zum selektiven Blockieren der Öffnung (12) des Unterbringungskastens (10), wobei der innere Deckel (20) dafür eingerichtet ist, gedreht zu werden, um die Öffnung (12) freizulegen, **dadurch gekennzeichnet, dass** der innere Deckel (20) dafür eingerichtet ist, nur entfernt zu werden, nachdem er drehend zu einer vorgeschriebenen Drehstellung (20a) des inneren Deckels bewegt worden ist, und
wobei das Fahrzeug ferner ein Rückhalteelement (70) umfasst, das dafür eingerichtet ist, die Drehung des inneren Deckels (20) an einer Drehstellung (20b) zurückzuhalten, bei welcher der Drehwinkel (θ2) des inneren Deckels (20) kleiner ist als der Drehwinkel (θ1) des inneren Deckels (20) bei der vorgeschriebenen Drehstellung (20a), ein Entfernen des inneren Deckels (20) zu verhindern.

2. Fahrzeug nach Anspruch 1, wobei der Sitz (30) drehbar an dem Fahrzeug angebracht ist und dafür eingerichtet ist, gedreht zu werden, um einen Zugang zu dem Unterbringungskasten (10) zu ermöglichen.

3. Fahrzeug nach Anspruch 1 oder 2, wobei das Rückhalteelement (70) den Sitz (30) umfasst.

4. Fahrzeug nach Anspruch 3,
wobei der Sitz (30) dafür eingerichtet ist, an einer vorgeschriebenen Drehstellung gegen ein Drehen zurückgehalten zu werden, und,
der Sitz (30) an der vorgeschriebenen Drehstellung dafür eingerichtet ist, den inneren Deckel (20) gegen ein drehendes Bewegen zurückzuhalten, um ein Entfernen des inneren Deckels (20) zu verhindern.

5. Fahrzeug nach einem der vorhergehenden Ansprüche,
wobei der innere Deckel (20) so an dem Unterbringungskasten (10) angebracht ist, dass er mit einer Scharnierstruktur (80) gedreht werden kann, und
die Scharnierstruktur (80) für den inneren Deckel (20) einen Aufbau hat derart, dass der innere Deckel (20) in einem Zustand entfernt werden kann, in dem das Rückhalteelement (70), das den Sitz (30) umfasst, von dem Fahrzeug entfernt worden ist, um die Rückhaltung gegen eine Drehbewegung des inneren Deckels (20) zu lösen.

6. Fahrzeug nach Anspruch 5,
wobei die Scharnierstruktur (80) mit einer Tragwelle (82), die an dem inneren Deckel (20) angebracht ist, und einem Anbringungsteil (84), das an dem Unterbringungskasten (10) angebracht ist, aufgebaut ist, und
der innere Deckel (20) durch Befestigen der Tragwelle (82) des inneren Deckels (20) in einer Öffnung (86) des Anbringungsteils (84) so getragen wird, dass er drehbar ist.

7. Fahrzeug nach Anspruch 6,
das Anbringungsteil (84) eine Entfernungsöffnung (86) hat, durch welche die Tragwelle (82) entfernt werden kann, und
die Scharnierstruktur (80) einen Aufbau hat derart, dass der innere Deckel (20) entfernbar gemacht wird durch ein drehendes Bewegen des inneren Deckels (20), um eine Ausrichtung der Tragwelle (82) in Bezug auf die Entfernungsöffnung zu verändern, in einem Zustand, in dem die Tragwelle (82) in dem Anbringungsteil (84) befestigt ist.

8. Fahrzeug nach Anspruch 7,
wobei die Tragwelle (82) eine erste Länge (L1) und eine zweite Länge (L2), die kürzer ist als die erste Länge (L1), auf einem Querschnitt, senkrecht zu einer Richtung einer Länge der Tragwelle (82), hat und
die Entfernungsöffnung (86) eine Öffnungsbreite (L3) hat, die kürzer als die erste Länge (L1) der Tragwelle (82) und länger als die zweite Länge (L2) der Tragwelle (82) ist.

9. Fahrzeug nach einem der vorhergehenden Ansprüche, wobei der Unterbringungskasten (10) einen Helm-Unterbringungskasten umfasst, der dazu in der Lage ist, einen Helm unterzubringen.

10. Fahrzeug nach Anspruch 9,
wobei der Sitz (30) auf eine Weise an dem Fahrzeug befestigt ist, dass er mit der Verwendung eines Werkzeugs entfernt werden kann, und
der Helm ein Vollschutzhelm ist, der in einem Zustand, in dem die Öffnung (12) durch den Sitz (30) und den inneren Deckel (20) blockiert ist, in dem Helm-Unterbringungskasten (10) untergebracht werden kann.

11. Fahrzeug nach einem der vorhergehenden Ansprüche, wobei das Fahrzeug ein Reitsitz-Fahrzeug ist.

## Revendications

1. Véhicule, comprenant:
un siège (30), monté sur le véhicule;
une boîte de rangement (10), positionnée au-dessous du siège (30) et adaptée pour être accessible en déplaçant le siège (30), la boîte de rangement (10) définissant une ouverture (12) à travers laquelle un article peut être inséré et retiré ;
un couvercle interne (20) pour bloquer sélectivement l'ouverture (12) de la boîte de rangement (10), le couvercle interne (20) étant adapté pour être tourné afin d'exposer l'ouverture (12), **caractérisé en ce que** le couvercle (20) est adapté pour être retiré uniquement après son déplacement rotatif vers une position de rotation définie (20a) du couvercle interne ; et
le véhicule comprenant en outre un élément de limitation (70), adapté pour limiter la rotation du couvercle interne (20) au niveau d'une position de rotation (20b) du couvercle interne, au niveau de laquelle l'angle de rotation (θ2) du couvercle interne (20) est plus petit que l'angle de rotation (θ1) du couvercle interne (20) au niveau de la position de rotation définie (20a) du couvercle interne, pour empêcher le retrait du couvercle interne (20).

2. Véhicule selon la revendication 1, dans lequel le siège (30) est monté de manière rotative sur le véhicule et est adapté pour être tourné pour permettre l'accès à la boîte de rangement (10).

3. Véhicule selon les revendications 1 ou 2, dans lequel l'élément de limitation (70) comprend le siège (30).

4. Véhicule selon la revendication 3,
dans lequel la rotation du siège (30) est limitée au niveau d'une position de rotation définie ; et
le siège (30) étant adapté, au niveau de la position de rotation prescrite, pour limiter le déplacement rotatif du couvercle interne (20) au niveau de la position de rotation définie, afin d'empêcher un retrait du couvercle interne (20).

5. Véhicule selon l'une quelconque des revendications précédentes,
dans lequel le couvercle interne (20) est monté sur la boîte de rangement (10), de sorte à pouvoir être tourné par une structure à charnière (80) ; et
la structure à charnière (80) pour le couvercle interne (20) ayant une construction telle que le couvercle interne (20) peut être retiré dans un état dans lequel l'élément de limitation (70), comprenant le siège (30), a été retiré du véhicule pour supprimer la limitation exercée sur le déplacement rotatif du couvercle interne (20).

6. Véhicule selon la revendication 5,
dans lequel la structure à charnière (80) comporte un arbre de support (82) monté sur le couvercle interne (20), et une pièce de montage (84) montée sur la boîte de rangement (10) ; et
le couvercle interne (20) étant supporté, pour permettre sa rotation, en fixant l'arbre de support (82) du couvercle interne (20) dans une ouverture (86) de la pièce de montage (84).

7. Véhicule selon la revendication 6,
dans lequel la pièce de montage (84) comporte une ouverture de retrait (86), à travers laquelle l'arbre de support (82) peut être retiré ; et
la structure à charnière (80) ayant une construction telle que le couvercle interne (20) peut être retiré en déplaçant de manière rotative le couvercle interne (20), pour changer une orientation de l'arbre de support (82) par rapport à l'ouverture de retrait, dans un état dans lequel l'arbre de support (82) est fixé dans la pièce de montage (84).

8. Véhicule selon la revendication 7,
dans lequel l'arbre de support (82) a une première longueur (L1) et une deuxième longueur (L2), plus courte que la première longueur (L1), dans une section transversale perpendiculaire à une direction d'une longueur de l'arbre de support (82) ; et
l'ouverture de retrait (86) ayant une largeur d'ouverture (L3) plus courte que la première longueur (L1) de l'arbre de support (82), et plus longue que la deuxième longueur (L2) de l'arbre de support (82).

9. Véhicule selon l'une quelconque des revendications précédentes, dans lequel la boîte de rangement (10) comprend une boîte de rangement d'un casque, capable de recevoir un casque.

10. Véhicule selon la revendication 9,
dans lequel le siège (30) est fixé sur le véhicule de manière telle qu'il peut être retiré par l'intermédiaire d'un outil ; et
le casque est un casque intégral, pouvant être logé dans la boîte de rangement du casque (10) dans un état dans lequel l'ouverture (12) est bloquée par le siège (30) et le couvercle interne (20).

11. Véhicule selon l'une quelconque des revendications précédentes, dans lequel le véhicule est un véhicule du type enjambeur.
